# EUROPEAN PATENT SPECIFICATION

(11) **EP 1 070 282 B1**
(45) Date of publication and mention of the grant of the patent: **18.08.2004**
(21) Application number: 99939137.8
(22) Date of filing: 21.01.1999
(51) Int. Cl.: G05B 17/02

(54) **METHOD AND APPARATUS FOR IDENTIFYING A PHYSICAL SYSTEM**
VERFAHREN UND VORRICHTUNG ZUR IDENTIFIZIERUNG EINES PHYSISCHEN SYSTEMS
METHODE ET DISPOSITIF D' IDENTIFICATION D' UN SYSTEME PHYSIQUE

(30) Priority: 22.01.1998 US 72161 P; 21.01.1999 US 234998
(43) Date of publication of application: 24.01.2001
(73) Proprietor: MTS SYSTEMS CORPORATION, Eden Prairie, MN 55344-2290 (US)
(72) Inventor: Lund, Richard A., Chaska, MN 55318 (US)
(74) Representative: VOSSIUS & PARTNER
(86) International application number: PCT/US1999/001233
(87) International publication number: WO 1999/038054

(56) References cited:
- WO-A-97/42553
- US-A- 5 175 678
- US-A- 5 353 207
- US-A- 5 377 307
- US-A- 5 598 329
- US-A- 5 649 063
- WOLPERT D M ET AL: "MULTIPLE PAIRED FORWARD AND INVERSE MODELS FOR MOTOR CONTROL" NEURAL NETWORKS, vol. 11, no. 7/08, 1 October 1998, pages 1317-1329, XP000667469

## Description

### BACKGROUND OF THE INVENTION

The present invention relates to a method of identification of a system, machine or process that is repetitive in nature or is amenable to at least some degree of rehearsal, as well as to a system for performing this method. More particularly, the present invention relates to calculating a model to be used for generating drive signals as input to a vibration system.

Vibration systems that are capable of simulating loads and/or motions applied to test specimens are generally known. Vibration systems are widely used for performance evaluation, durability tests, and various other purposes as they are highly effective in the development of products. For instance, it is quite common in the development of automobiles, motorcycles, or the like, to subject the vehicle or a substructure thereof to a laboratory environment that simulates operating conditions such as a road or test track. Physical simulation in the laboratory involves a well-known method of data acquisition and analysis in order to develop drive signals that can be applied to the vibration system to reproduce the operating environment. This method includes instrumenting the vehicle with transducers "remote" to the physical inputs of the operating environment. Common remote transducers include, but are not limited to, strain gauges, accelerometers, and displacement sensors, which implicitly define the operating environment of interest. The vehicle is then driven in the same operating environment, while remote transducer responses (internal loads and/or motions) are recorded. During simulation with the vehicle mounted to the vibration system, actuators of the vibration system are driven so as to reproduce the recorded remote transducer responses on the vehicle in the laboratory.

However, before simulated testing can occur, the relationship between the input drive signals to the vibration system and the responses of the remote transducers must be characterized in the laboratory. Typically, this "system identification" procedure involves obtaining a respective model or transfer function of the complete physical system (e.g. vibration system, test specimen, and remote transducers) hereinafter referred to as the "physical system"; calculating an inverse model or transfer function of the same; and using the inverse model or transfer function to iteratively obtain suitable drive signals for the vibration system to obtain substantially the same response from the remote transducers on the test specimen in the laboratory situation as was found in the operating environment.

As those skilled in the art would appreciate, this process of obtaining suitable drive signals is not altered when the remote transducers are not physically remote from the test system inputs (e.g. the case where "remote" transducers are the feedback variables, such as force or motion, of the vibration system controller).

Although the above-described system and method for obtaining drive signals for a vibration system has enjoyed substantial success, there is a continuing need to improve such systems. In particular, there is a need to improve models of the physical system and the iterative process for obtaining the drive signals.

### SUMMARY OF THE INVENTION

The present invention, as defined by claims 1 and 23, relates to a method and system for identifying a physical system responsive to an input to produce a selected output. The method comprises defining a virtual identity system that includes the physical system for receiving the input to provide an actual output; and checking a quality of identity of the virtual identity system using at least a function of the actual output. The system controller includes program modules to perform the method. Instructions can also be provided on a computer readable medium. to implement the method.

### BRIEF DESCRIPTION OF THE DRAWINGS

FIG. 1 is a block diagram of an exemplary environment for practicing the present invention.
FIG: 2 is a computer for implementing the present invention.
FIG. 3A is a flow chart illustrating the steps involved in an identification phase of a prior art method of vibration testing.
FIG. 3B is a flow chart illustrating the steps involved in an iterative phase of a prior art method of vibration testing.
FIG. 3C is a flow chart illustrating the steps involved in another iterative phase of a prior art method of vibration testing.
FIG. 4A is a detailed block diagram of a prior art iterative process for obtaining drive signals for a vibration system with an adjuster of the present invention.
FIG. 4B is a detailed block diagram of another prior art iterative process for obtaining drive signals for a vibration system with the adjuster of the present invention.
FIG. 5 is a general block diagram of an aspect of the present invention.
FIG. 6 is a detailed block diagram of an embodiment of the invention of FIG. 5.
FIG. 7 is a flow chart illustrating the steps involved for operating the embodiment of FIG. 6.
FIG. 8 is a detailed block diagram of another embodiment of the invention of FIG. 5.
FIG. 9 is a general block diagram of a second aspect of the present invention.
FIG. 10 is a general block diagram of a third aspect of the present invention.
FIG. 11 is a detailed block diagram of an embodiment of the invention of FIG. 9.
FIG. 12 is a detailed block diagram of an embodiment of the invention of FIG. 10.
FIG. 13 is a block diagram of a fourth aspect of the present invention.
FIG. 14 is a block diagram of a fifth aspect of the present invention.
FIG. 15 is a block diagram of a sixth aspect of the present invention.
FIG. 16 is a pictorial representation of a seventh aspect of the present invention.
FIG. 17 is a block diagram of a eighth aspect of the present invention.
FIG. 18 is a block diagram of ninth aspect of the present invention.

### DETAILED DESCRIPTION OF THE PREFERRED EMBODIMENTS

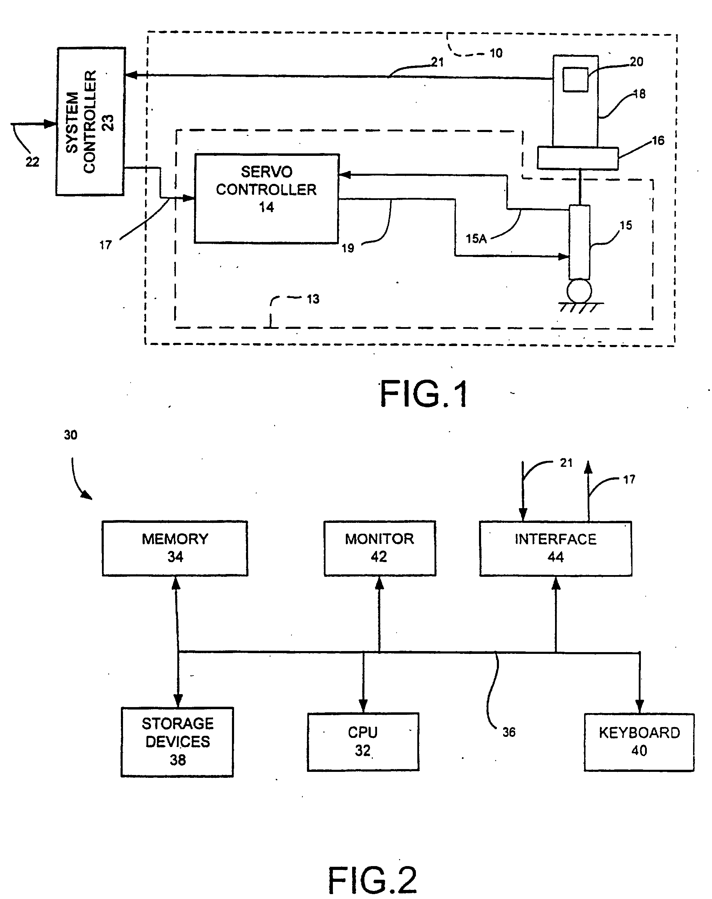

FIG. 1 illustrates a physical system 10. The physical system 10 generally includes a vibration system 13 comprising a servo controller 14 and an actuator 15. In the schematic illustration of FIG. 1, the actuator 15 represents one or more actuators that are coupled through a suitable mechanical interface 16 to a test specimen 18. The servo controller 14 provides an actuator command signal 19 to the actuator 15, which in turn, excites the test specimen 18. Suitable feedback 15A is provided from the actuator 15 to the servo controller 14. One or more remote transducers 20 on the test specimen 18, such as displacement sensors, strain gauges, accelerometers, or the like, provide a measured or actual response 21. A physical system controller 23 receives the actual response 21 as feedback to compute a drive 17 as input to the physical system 10. In an iterative process discussed below, the physical system controller 23 generates the drive 17 for the physical system 10 based on the comparison of a desired response provided at 22 and the actual response 21 of the remote transducer 20 on the test specimen 18. Although illustrated in FIG. 1 for the single channel case, multiple channel embodiments with response 21 comprising N response components and the drive 17 comprising M drive components are typical and considered another embodiment of the present invention.

Although described herein where the physical system comprises the vibration system 13 and remote transducer 20, aspects of the present invention described below can be applied to. other physical systems. For instance, in a manufacturing process, the physical system includes the manufacturing machines (e.g. presses, molding apparatus, forming machines, etc.) and the drive 17 provides command signals to said machines, and the actual response 21 comprises manual or automatic measured parameters of the manufactured article such as a critical dimension. Another example includes an oil refinery where the physical system is the process plant and the actual response 21 comprises intermediate or final parameters related to output products.

FIG. 2 and the related discussion provide a brief, general description of a suitable computing environment in which the invention may be implemented. Although not required, the physical system controller 23 will be described, at least in part, in the general context of computer-executable instructions, such as program modules, being executed by a computer 30. Generally, program modules include routine programs, objects, components, data structures, etc., which perform particular tasks or implement particular abstract data types. The program modules are illustrated below using block diagrams and flowcharts. Those skilled in the art can implement the block diagrams and flowcharts to computer-executable instructions. Moreover, those skilled in the art will appreciate that the invention may be practiced with other computer system configurations, including multiprocessor systems, networked personal computers, mini computers, main frame computers, and the like. The invention may also be practiced in distributed computing environments where tasks are performed by remote processing devices that are linked through a communications network. In a distributed computer environment, program modules may be located in both local and remote memory storage devices.

The computer 30 illustrated in FIG. 2 comprises a conventional personal or desktop computer having a central processing unit (CPU) 32, memory 34 and a system bus 36, which couples various system components, including the memory 34 to the CPU 32. The system bus 36 may be any of several types of bus structures including a memory bus or a memory controller, a peripheral bus, and a local bus using any of a variety of bus architectures. The memory 34 includes read only memory (ROM) and random access memory (RAM). A basic input/output (BIOS) containing the basic routine that helps to transfer information between elements within the computer 30, such as during start-up, is stored in ROM. Storage devices 38, such as a hard disk, a floppy disk drive, an optical disk drive, etc., are coupled to the system bus 36 and are used for storage of programs and data. It should be appreciated by those skilled in the art that other types of computer readable media that are accessible by a computer, such as magnetic cassettes, flash memory cards, digital video disks, random access memories, read only memories, and the like, may also be used as storage devices. Commonly, programs are loaded into memory 34 from at least one of the storage devices 38 with or without accompanying data.

An input device 40 such as a keyboard, pointing device (mouse), or the like, allows the user to provide commands to the computer 30. A monitor 42 or other type of output device is further connected to the system bus 36 via a suitable interface and provides feedback to the user. The desired response 22 can be provided as an input to the computer 30 through a communications link, such as a modem, or through the removable media of the storage devices 38. The drive signals 17 are provided to the physical system 10 of FIG. 1 based on program modules executed by the computer 30 and through a suitable interface 44 coupling the computer 30 to the vibration system 13. The interface 44 also receives the actual response 21.

Before describing the present invention, it may also be helpful to review, in detail, a known method for modeling the physical system 10 and obtaining the drive 17 to be applied thereto. Although described below with respect to a test vehicle, it should be understood that this prior art method and the present invention discussed below are not confined to testing only vehicles, but can be used on other types of test specimens and substructures or components thereof. In addition, the description is done assuming spectral analysis based modeling estimation and implementation though operations can be carried by several other mathematical techniques (e.g. Adaptive Inverse Control (AIC) type models, parametric regression techniques such as Auto Regressive Exogenous (ARX) and State Space types of models, or combinations thereof).

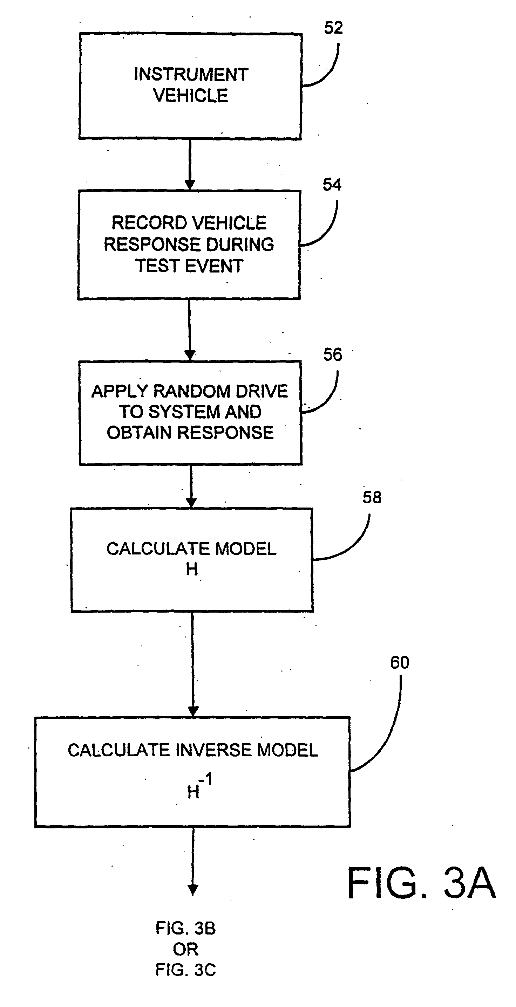

Referring to FIG. 3A, at step 52, the test vehicle is instrumented with the remote transducers 20. At step 54, the vehicle is subjected to the field operating environment of interest and the remote transducer responses are measured and recorded. For instance, the vehicle can be driven on a road or test track. The measured remote transducer responses, typically analog, are stored in the computer 30 in a digital format through analog-to-digital converters, as is commonly known.

Next, in an identification phase, the input/output model of the physical system 10 is determined. This procedure includes providing drive 17 as an input to the physical system 10 and measuring the remote transducer response 21 as an output at step 56. The drive 17 used for model estimation can be random "white noise" having frequency components over a selected bandwidth. At step 58, an estimate of the model of the physical system 10 is calculated based on the input drive applied and the remote transducer response obtained at step 56. In one embodiment, this is commonly known as the "frequency response function" (FRF). Mathematically, the FRF is a N x M matrix wherein each element is a frequency dependent complex variable (gain and phase versus frequency). The columns of the matrix correspond to the inputs, while the rows correspond to the outputs. As appreciated by those skilled in the art, the FRF may also be obtained directly from prior tests using the physical system 10 or other systems substantially similar to the physical system 10

An inverse model H(f)⁻¹ is needed to determine the physical drive 17 as a function of the remote responses at step 60. As appreciated by those skilled in the art, the inverse model can be calculated directly. Also, the term "inverse" model as used herein includes a M x N "pseudo-inverse" model for a non-square N x M system.

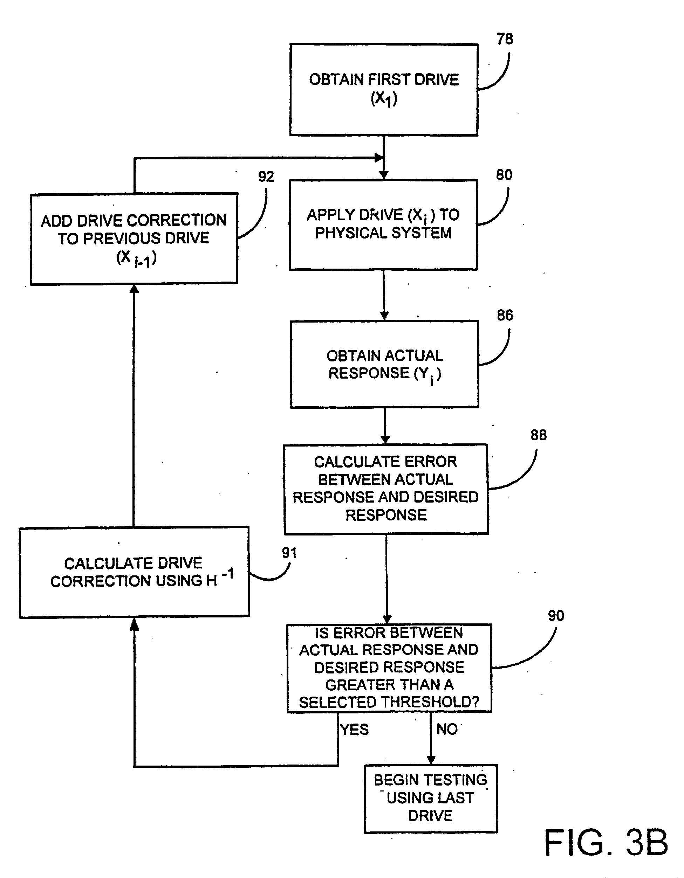

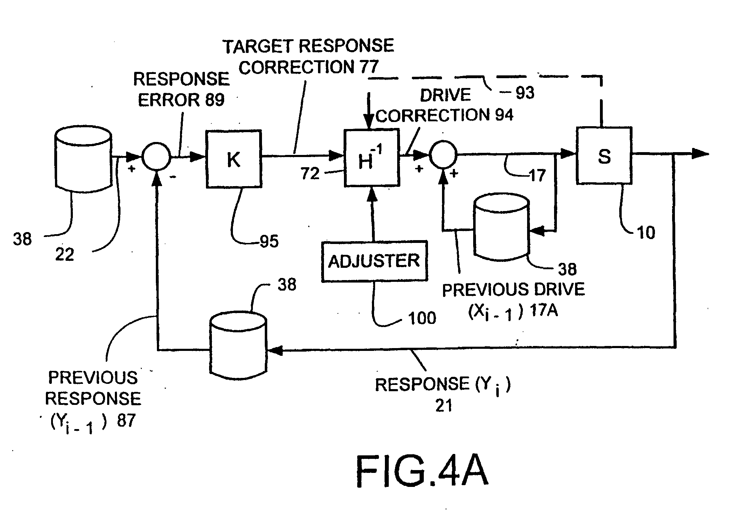

At this point in the prior art, the method enters an iterative phase, illustrated in FIGS. 3B and 4A, to obtain drive 17 which produces actual response 21 that ideally replicates the desired remote transducer response 22 (hereinafter "desired response"). The inverse physical system model H(f)⁻¹ is represented at 72, while physical system (vibration system, test vehicle, remote transducers and instrumentation) is represented at 10. Referring to FIG. 3B, at step 78, the inverse model 72 is applied to a target response correction 77 in order to determine an initial drive 17 x₁(t). The target response correction 77 can be the desired response 22 for the initial drive, though most often it is reduced by a relaxation gain factor 95. The calculated drive 17 x₁(t) from the inverse model 72 is then applied to the physical system 10 at step 80. The actual remote transducer response 21 (hereinafter "actual response") y₁(t) of the physical system 10 to the applied drive 17 x₁(t) is then obtained at step 86. If the complete physical system 10 is linear (allowing a relaxation gain 95 of unity), then the initial drive 17 x₁(t) could be used as the required drive. However, since physical systems are typically non-linear, the correct drive 17 has to be arrived at by an iterative process. (As appreciated by those skilled in the art, drive 17 used in previous tests for a similar physical system may be used as the initial drive.)

The iterative process involves recording the first actual response y₁(t) resulting from the initial drive x₁(t) and comparing it with the desired response 22 and calculating a response error 89 Δy₁ as the difference at step 88. (The first actual response signal y₁(t) is provided at 87 in FIG. 4A.) The response error 89 Δy₁ is compared to a preselected threshold at step 90 and if the response error 89 exceeds the threshold an iteration is performed. Specifically the response error 89 Δy₁ is reduced by the relaxation gain factor 95 to provide the new target response correction 77. In this embodiment, the inverse transfer function H(f)⁻¹ is applied to the new target response correction 77 to create a drive correction Δx₂ 94 (step 91) that is added to the first drive x₁(t) 17A to give a second drive x₂(t) 17 at step 92. The iteration process (steps 80-92) is repeated until the response error 89 is brought down below the preselected threshold on all channels of the response. The last drive 17, which produced a response 21, that was within the predetermined threshold of the desired response 22, can then be used to perform specimen testing.

As described, the response error 89 Δy is commonly reduced by the relaxation gain factor (or iteration gain) 95 to form the target response correction 77. The iteration gain 95 stabilizes the iterative process and trades off rate-of-convergence against iteration overshoot. Furthermore, the iteration gain 95 minimizes the possibility that the test vehicle will be overloaded during the iteration process due to non-linearities present in the physical system 10. As appreciated by those skilled in the art, an iteration gain can be applied to the drive correction 94 Δx and/or the response error 89. It should be noted in FIG. 4A that storage devices 38 can be used to store the desired response 22, the actual responses 21 and previous drives 17A during the iterative process. Of course, memory 34 can also be used. Also, a dashed line 93 indicates that the inverse model 72 is an estimate of the inverse of the physical system 10. The block diagram of FIG. 4A, as discussed above, can be implemented by those skilled in the art using commercially available software modules such as included with RPCIII™ from MTS Systems Corporation of Eden Prairie, Minnesota.

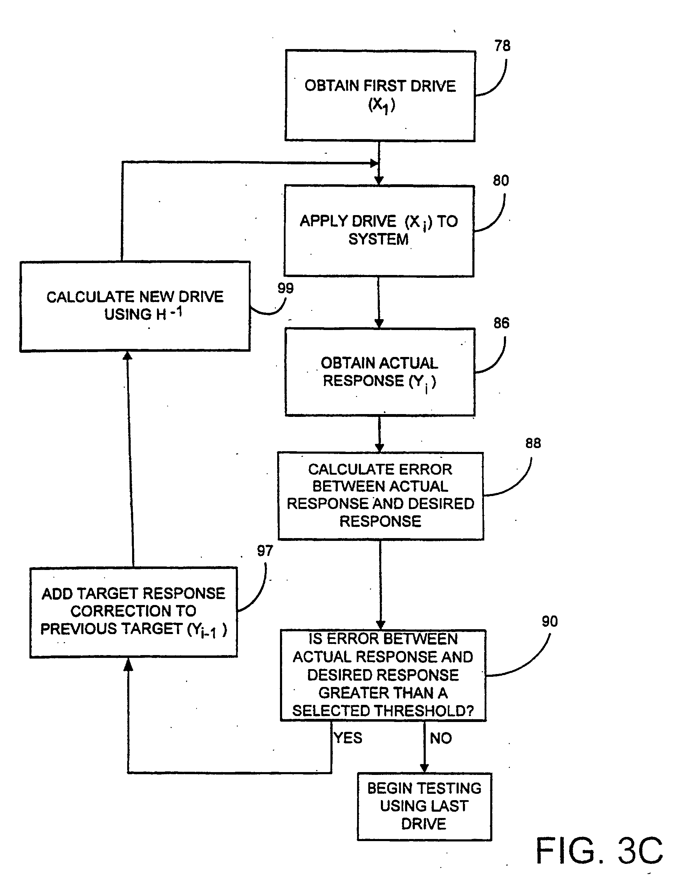

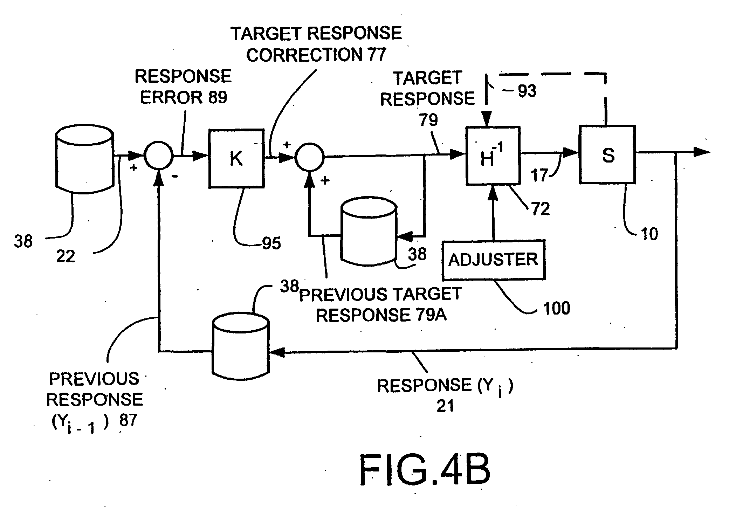

At this point, a modified method of the prior art for calculating the drive can also be discussed. The modified prior art method includes the steps of the identification phase illustrated in FIG. 3A and many of the steps of the iterative phase illustrated in FIG. 3B. For convenience, the iterative steps of the modified method are illustrated in FIG. 3C and the block diagram as illustrated in FIG. 4B: As illustrated in FIG. 4B, the calculation of the target response correction 77 is identical. However, if the response error 89 between the actual response 21 and the desired response 22 is greater than a selected threshold, then the target response correction 77 is added to a previous target response 79A at step 97 to obtain a new target response 79 for the current iteration. The inverse model 72 is applied to the target response 79 to obtain the new drive 17. As illustrated in FIG. 4B, the iteration gain 95 can be used for the reasons discussed above.

Generally, an aspect of the present invention includes the response time history error iteration loop described above with respect to FIGS. 4A and 4B, while including an adjuster 100 that operates during each step of the iterative process, to improve the physical system inverse model 72. As illustrated in FIG. 4A, the adjuster 100 corrects the inverse model 72 which receives the target response correction 77 directly as a simple function of the response error 89 (i.e. without previous target information 79A of FIG. 4B) and where the physical system drive 17 comprises drive correction 94 in combination with a previous drive 17A. Conversely, as illustrated in FIG. 4B, the inverse model 72 receives the target response 79 as the combination of the target response correction 77 and a the previous target response 79A, and drive 17 is directly obtained by applying the inverse model 72. In the case of FIG 4B, the adjuster 100 corrects the inverse model 72 in a conceptually identical fashion as in FIG. 4A. However, as will be discussed below, the configurations of FIGS. 4A and 4B render different signals available to the virtual identity modeling process each with inherent situational advantages. Furthermore, as will be described below, the adjuster 100 can also operate in an iterative manner.

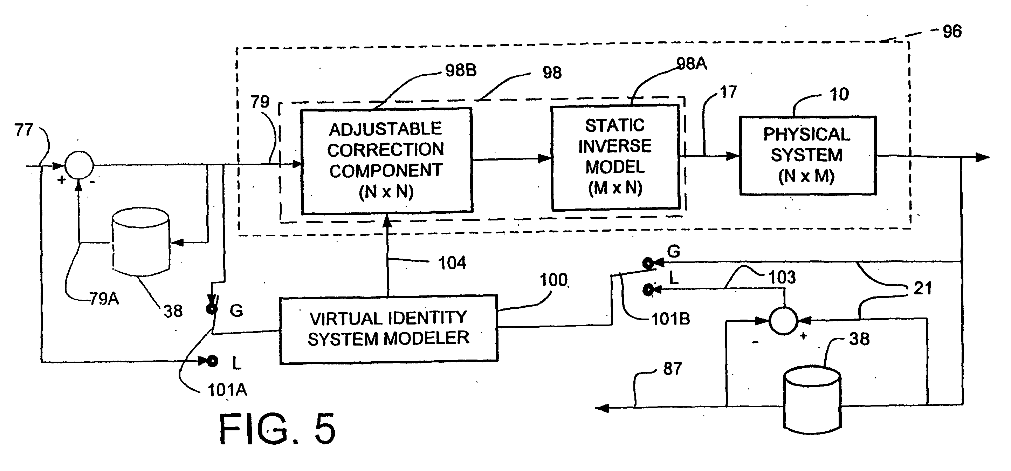

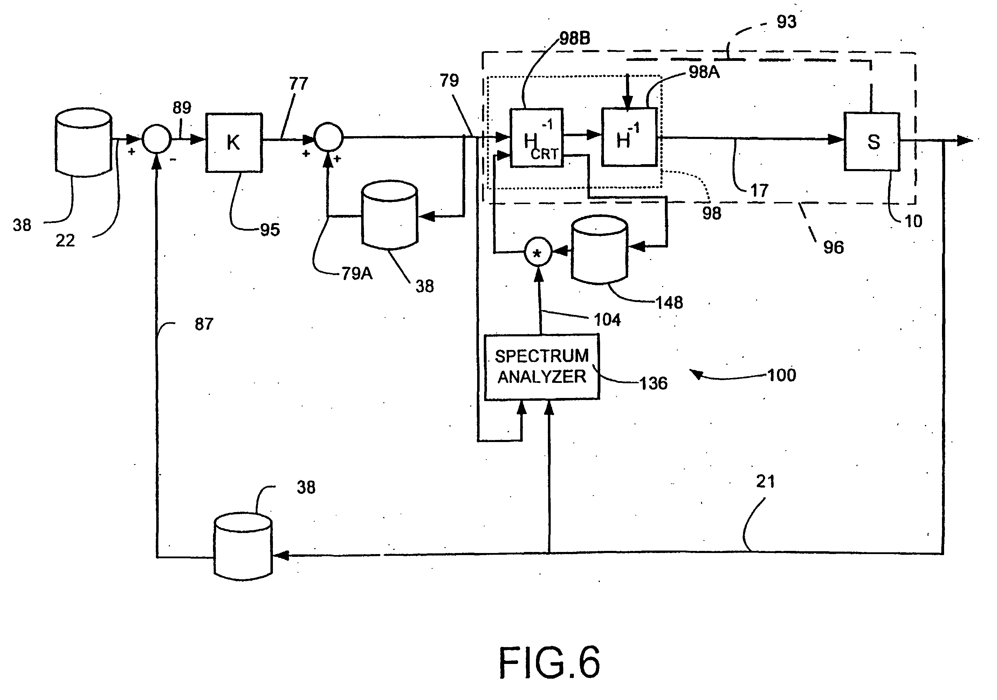

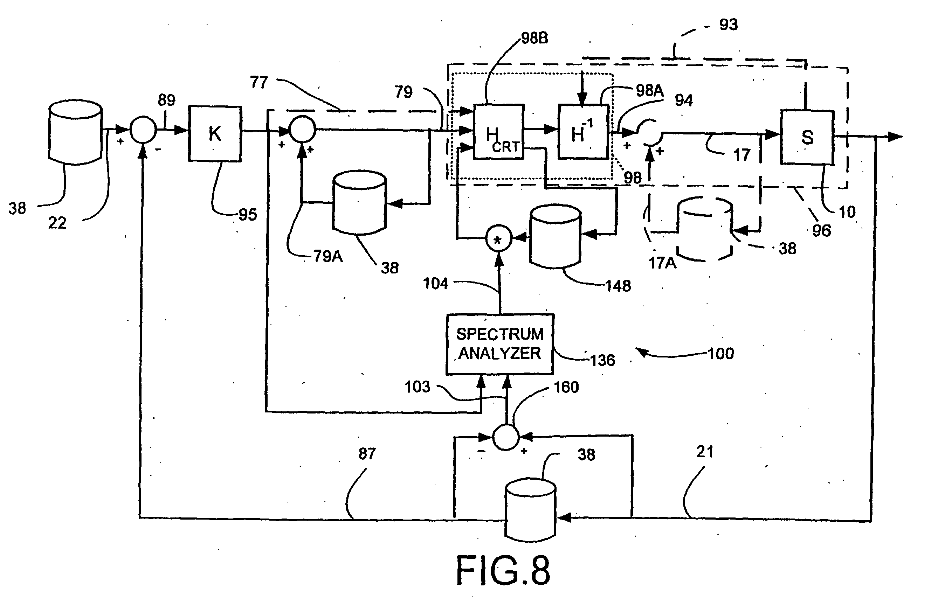

An aspect of the present invention is illustrated in the block diagram of FIG. 5. Generally, this aspect of the invention includes a method of controlling the physical system 10 to produce an actual response 21 that ideally matches the desired response 22 consistent with prior art as discussed. The method includes generating an inverse model 98 (e.g. the inverse transfer function H(f)⁻¹) of the physical system 10, wherein the inverse model 98 is applied to the target response 79 to obtain the drive 17 intended to generate the desired response 22 from the physical system 10 as the actual response 21. As will be described below with respect to FIG. 6, the target response correction 77 can be combined with the previous target response 79A, when the inverse model 98 is applied to the target response 79 to realize the complete drive 17. Alternatively, as illustrated in FIG. 8 with dashed lines, the inverse model 98 can be applied to the target response correction 77 directly to realize the drive correction 94, which is then subsequently combined with the previous drive 17A to provide a new drive 17 for the physical system 10.

Referring back to FIG. 5, the adjuster 100 can comprise a virtual identity system modeler that checks a quality of identity of the inverse model 98 in combination with the physical system 10. The combination of the inverse model 98 and the physical system 10 is designated as a virtual identity system 96. The quality of identity, as measured by the virtual identity system modeler 100, assesses the accuracy of the physical system 10 model relative to the operating characteristics of the physical system 10. In this embodiment, the quality of identity is measured via the series connection of the physical system 10 with the inverse system model 98. When the inverse system model 98 identically matches the physical system 10, the quality of identity calculation produces an identity result, indicating an ideal inverse system model estimate.

The advantage of this approach is that a model of a potential correction to the physical system inverse model that improves the quality of the virtual identity system can take a simpler form than the inverse model itself. Consequently, the model correction is much easier to obtain than a new estimate of the complete inverse system model. This approach leads to a straightforward algorithmic formulation of such a correction model estimate (e.g. the FRF between the target response and the actual response). The simple form of this modeling technique allows smaller segments of noisier and more correlated data to be used, thereby providing an advantage in an adaptive environment for either non-parametric (spectrum analysis, etc.) or parametric (ARX, etc.) modeling methods.

In one embodiment of FIG. 5, with switches 101A and 101B at position "G", the virtual identity system modeler 100 compares the target response 79 and the actual response 21. In another embodiment with switches 101A and 101B at position "L", the virtual identity system modeler 100 compares the target response correction 77 and an actual response correction 103 (difference between response yᵢ and response yᵢ₋₁) obtained from application of the drives 17 to the physical system 10 for successive iterations. In either embodiment, the virtual identity system modeler 100 subsequently adapts the inverse model 98 as a function of the quality of identity from iteration to iteration. In other words, the virtual identity system modeler 100 provides as an output, model (e.g. FRF) correction values 104 to adjust at least some of the values present in the inverse model 98. In both of these preferred embodiments, the correction values 104 are derived on a channel by channel basis, a natural simplification facilitated by the virtual identity system. Cross-coupling effects do not then form part of the correction values 104, although all terms of the inverse model 98 will generally change when the correction values 104 are applied. These preferred embodiments however do not preclude the option of including some or all cross-coupling terms into the correction values 104.

It should be understood that switches 101A and 101B represent selection of the type of data provided to the virtual identity system modeler 100 and are not typically a physical electrical switch. Rather, switches 101A and 101B represent software routines or modules used to acquire and provide the selected data to the virtual identity system modeler 100.

In FIG. 5, the inverse model 98 includes a static inverse model component 98A and an adjustable component 98B. The static component 98A is similar to the inverse model 72, discussed above. For instance, the static component 98A can be the inverse model H(f)⁻¹ that was calculated by taking the inverse of forward model H(f) at step 58 (FIG. 3A). The static component 98A of the inverse model typically comprises a M x N matrix that includes cross-coupling effects, where M is the number of inputs (drive 17) and N is the number of outputs (actual response 21).

The adjustable component 98B receives the inverse model correction values 104 from the virtual identity system modeler 100 for purposes of iteratively adapting the inverse model 98 to the current operating conditions. In one embodiment, the adjustable component 98B comprises an N x N matrix with correction values for each of the N channels located on the diagonal and all other values (off-diagonal) equal to zero.

FIG 6 is an embodiment of the functionality discussed in FIG. 5 in the context of the overall iterative control process detailed in FIG. 4B. Relative to FIG. 4B, in FIG 6, the inverse model 98 is extended to include the static component 98A and the adjustable component 98B of FIG. 5.

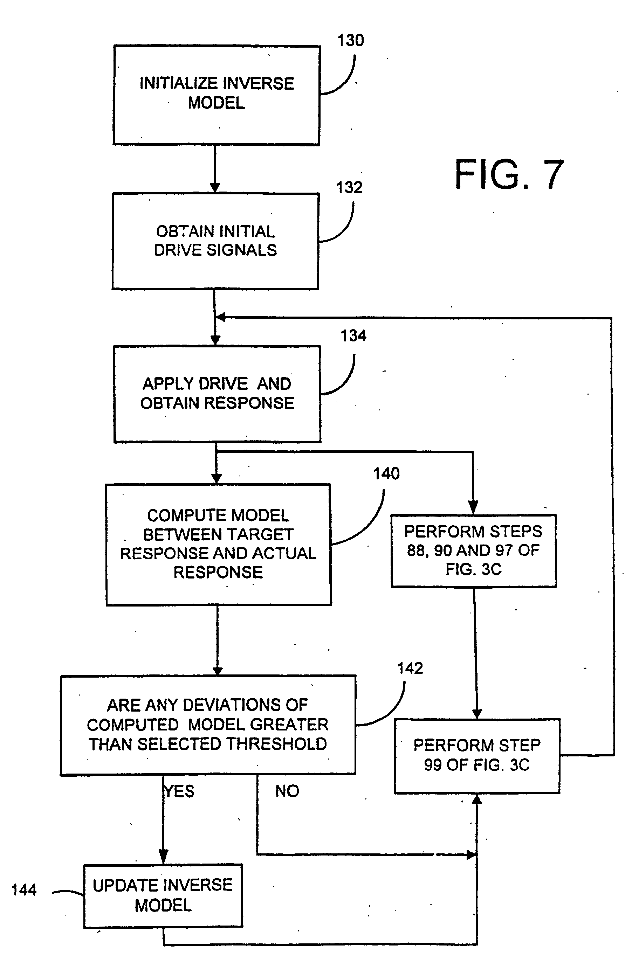

FIG. 7 illustrates a method of operation for the embodiment of FIG. 6. At step 130, the inverse model 98 is initialized. This step includes initialization of the static component 98A as discussed above with respect to the method of FIG. 3A (step 58), and initialization of the adjustable component 98B, which for the first iteration is typically an identity model. In other words, the adjustable component 98B has no effect during the first iteration.

At step 132, the initial drive 17 is obtained by convolving the target response 79 with the inverse model 98. In view that the inverse model 98 includes the static component 98A and the adjustable component 98B, the target response 79 is first convolved with the adjustable component 98B, the output of which is then convolved with the static component 98A. In certain cases, the static component 98A and the adjustable component 98B can be combined subsequently, requiring a single convolution. At step 134, the drive 17 is applied to the physical system 10 wherein the actual response 21 is measured and recorded.

Having obtained the actual response 21 of the physical system 10 from the initial drive 17, the virtual identity system modeler 100 performs spectral analysis between the target response 79 and the actual response 21. In the embodiment illustrated in FIG. 6, the virtual identity system modeler 100 includes a spectrum analyzer 136 that receives the target response 79 and the actual response 21. In one embodiment on a channel by channel basis, the spectrum analyzer 136 calculates an FRF between the target response 79 and the actual response 21. This is represented at step 140. In other words, this step calculates a quality of the identity of the inverse model 98 and the physical system 10 (i.e. the virtual identity system 96). The values 104 (FIG. 6) are corrections to the inverse model 98. At step 142, the deviation of the FRF from identity is determined and if one or more of the deviations exceed the corresponding selected threshold, values on the diagonal of the adjustable component 98B are updated at step 144. This is represented in FIG. 6 where previous values of the adjustable component 98B stored at 148 are combined with new values provided by the spectrum analyzer 136, iteratively correcting the adjustable component 98B.

At this point, it should be noted that steps 88, 90, 97 and 99 of FIG. 3C are still performed in order to obtain the refined drive 17. However, before the new drive 17 is calculated at step 99, the inverse model is updated at step 144.

In the overall iterative process, steps 134, 140, 142 and 144 are only repeated as necessary when deviations in the model between the actual response 21 and the target response 79 are greater than the selected model threshold. Steps 88, 90, 97 and 99 of FIG. 3C are performed independently for each iteration .until the error threshold of step 90 is realized.

It should be understood by those skilled in the art that although the virtual identity system modeler 100 and corresponding inverse model 98 are described in terms of spectral analysis methods, other mathematical models and model regression techniques, either parametric or non-parametric, can be employed as desired in selected combinations (e.g. AIC, ARX, ARMA, State Space).

FIG. 8 illustrates an alternative embodiment where the actual response correction 103 is compared to the target response correction 77 and is used as a basis for updating the values of the adjustable component 98B. In FIG. 8, a summer 160 is used to obtain a difference between the actual response 21 and the immediately preceding actual response 87 (i.e. the actual response correction 103). During the iterative process, the spectrum analyzer 136 calculates an FRF between the target response correction 77 and the actual response correction 103 in order to update the adjustable component 98B.

In FIG. 8, target response correction 77 is added to the previous target response 79A to form the new target response 79 for each iteration. As appreciated by those skilled in the art, the target response correction 77 alone can be convolved with the inverse model 98 to form the corresponding drive correction 94, which can be combined with the previous drive 17A to form new drive 17. Formation of the new drive 17 in this manner does not alter the comparison by the spectrum analyzer 136

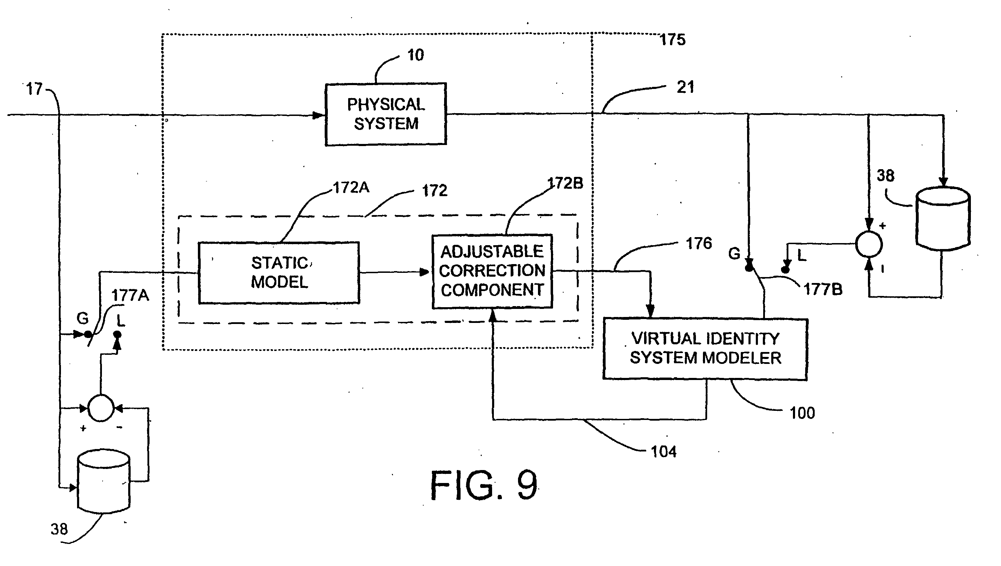

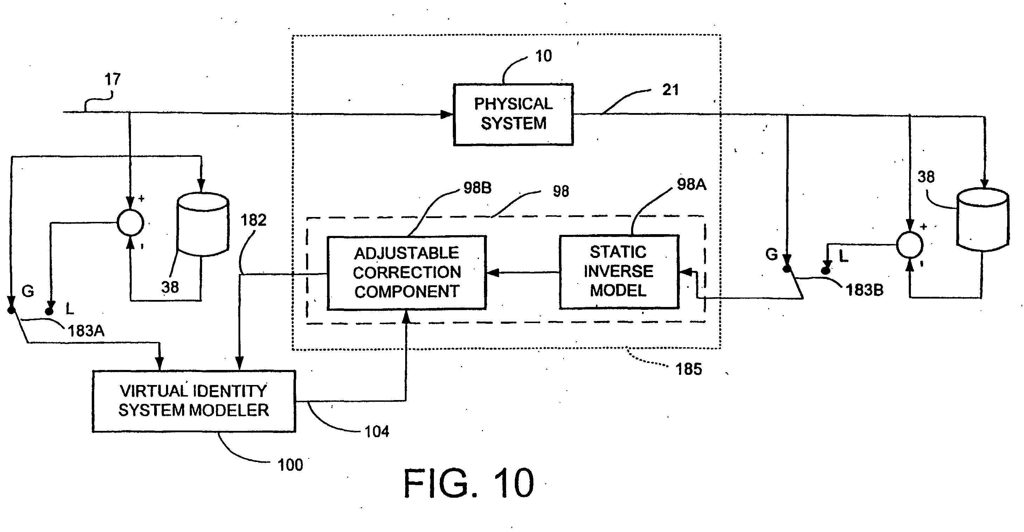

Other general aspects of the present invention are illustrated in FIGS. 9 and 10. For cases where the target response 79 (or target response correction 77) does not exist in the forward iteration control loop, it can be explicitly computed with mathematical equivalence as demonstrated in FIG 9. In FIG. 9, drive 17 is applied to the physical system 10 and to a forward model 172 of the physical system 10, wherein a virtual identity system is indicated by dashed lines 175. It can be shown that virtual identity system 175 is mathematically equivalent to the virtual identity system 96 of FIG. 5.

The actual response 21 from the physical system 10 and a modeled target response 176 from the forward model 172 are provided to the virtual identity system modeler 100. In one embodiment, the virtual identity system modeler 100 performs spectrum analysis between the actual response 21 and the modeled target response 176 to check the quality of identity of virtual identity system 175, since signal 176 is equal to either signal 79 or signal 77 of FIG. 5, depending on the position of switch 177A. The virtual identity system modeler 100 subsequently adjusts the model 172 accordingly as a function of the quality of identity.

In the embodiment illustrated, the model 172 includes a static component 172A and an adjustable component 172B. The static component 172A can be obtained per step 58 of FIG. 3A. The static component 172A typically comprises a N x M model that includes cross-coupling terms.

The virtual identity system modeler 100 provides correction values 104 to the adjustable component 172B. In one embodiment, the adjustable component 172B comprises a N x N diagonal model.

In a manner similar to FIG. 5, switches 177A and 177B allow the inputs to the virtual identity system modeler 100 to be either the modeled target response and the actual response or the modeled target response corrections and the actual response corrections. Those skilled in the art will recognize that switch 177A and associated summer and storage device could also be applied in the data path between the static model 172A and the adjustable component 172B rather than operating on the drive 17 as illustrated. Likewise, the switch 177A and associated summer and storage device can also be applied to the modeled target response 176 in some circumstances.

Alternatively, a similar implementation that could have preferred characteristics, potentially such as when N and M are unequal with the number of outputs or responses N greater than the number of inputs or drives M, is illustrated in FIG. 10. In FIG. 10, a virtual identity system is indicated by dashed lines 185 and comprises physical system 10 and inverse model 98. However, the quality of the identity is ascertained by comparing drive 17 applied to the physical system 10 with a corresponding modeled drive signal 182 obtained from the inverse model 98. Note in this case, the virtual identity system 185 is formed with respect to drive signals as opposed to the use of response signals as in other embodiments. As always, the actual response 21 is obtained from the physical system 10 when the drive 17 is applied thereto. The actual response 21 is then provided as an input to the inverse model 98. In one embodiment, the virtual identity system modeler 100 performs spectrum analysis between the drive 17 and the modeled drive 182 for successive iterations. The virtual identity system modeler 100 subsequently adjusts the inverse model 98 and, more particularly, the adjustable component 98B.

In a manner similar to FIGS. 5 and 9, switches 183A and 183B allow the inputs to the virtual identity system modeler 100 to be either the drive 17 and the modeled drive 182 (as illustrated with switches 183A and 183B in the "G" position), or the drive corrections 94 and the modeled drive corrections (as illustrated with the switches 183A and 183B in the "L" position). Those skilled in the art will be able to recognize that switch 183B and associated summer and storage device can also be applied in the data path between the static inverse model 98A and the adjustable component 98B rather than operating on the actual response 21, as illustrated. Likewise, the switch 183B and associated summer and storage device can be applied to the modeled drive signal 182 in some circumstances.

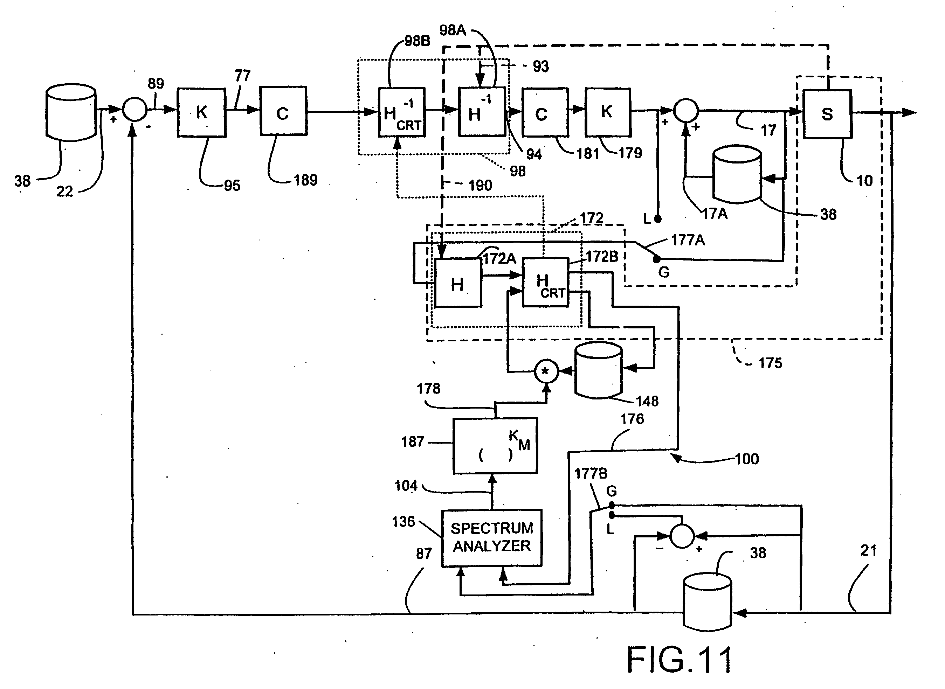

FIG. 11 is an embodiment of the functionality discussed in FIG. 9 in the context of the iterative adaptive process of FIG. 8 where the same reference numerals have been used to identify identical components. FIG. 11 further includes relaxation gain 179 and frequency weighting function 181. Relaxation gain 179 is similar to relaxation gain 95, but provides gain on the drive correction 94 rather than on the response error 89. Frequency weighting function 181 can be manually defined as well as computed from coherence type quantities (as indicated by "C" in 181) or other measures of model quality, generally as, but not limited to a function of frequency. An example of a coherence type quantity for frequency weighting of the drive correction 94 at 181 can be formulated as [H2]⁻¹[H1], where H1 is a forward system model for the physical system 10 assuming noise on the inputs, and H2 is a forward system model assuming noise on the outputs. Similarly, frequency weighting (e.g. [H1]*[H2]⁻¹ )on the responses can be provided at 189, if desired.

The presence of either relaxation gain 179 or frequency weighting 181, or other such functions, between the inverse model 98 and the physical system 10, breaks up the virtual identity system 96 of the forward iteration loop illustrated in FIG. 5. Therefore, in the embodiment of FIG. 11, the virtual identity system 175 is explicitly constructed per the illustration of FIG. 9.

Referencing FIG. 11, the forward model 172 includes the static forward model 172A and the adjustable component 172B of the physical system 10. Per step 58 of FIG. 3A, the static forward model 172A is determined; it's association with the physical system 10 is represented in FIG. 11 by dashed line 190. With the static forward model 172A determined, the static inverse model 98A of the physical system 10 is then calculated, the association represented by dashed line 93. Both the forward adjustable component 172B and inverse adjustable component 98B are then initialized with diagonal elements set to one and off-diagonal elements set to zero.

Initial drive 17 is obtained consistent with the method discussed above. The initial drive 17 is then applied to the physical system 10 wherein the actual response 21 is measured and recorded. As illustrated, the initial drive 17 is also applied to the forward model 172 to generate the modeled response 176 (an equivalent response to the target response 79 of FIGS. 6 and 8 with switches 177A and 177B in the "G" position).

The virtual identity system modeler 100 compares the actual response 21 to the modeled response 176. In the embodiment illustrated, the Virtual identity system modeler 100 comprises the spectrum analyzer 136 and performs spectral analysis between the actual response 21 and the modeled response 176 on a channel by channel basis. Consistent with previous embodiments, the deviation of the FRF from identity is then determined by the spectrum analyzer 136 and if one or more of the deviations exceed the corresponding selected threshold, values on the diagonal of the adjustable component 172B are updated. By simply taking the inverse of the adjustable component 172B, values for the adjustable component 98B can be easily calculated for the next iteration, which begins with the calculation of the response error 89.

A relaxation gain 187 can provide stabilization of the model update iteration loop. The relaxation gain 187 can be applied to correction values 104 as a "power" kₘ, thereby creating relaxed correction values 178 that are applied to the model correction 172B. Note, also, that the relaxation gain 187 can be incorporated in any of the embodiments discussed in this application.

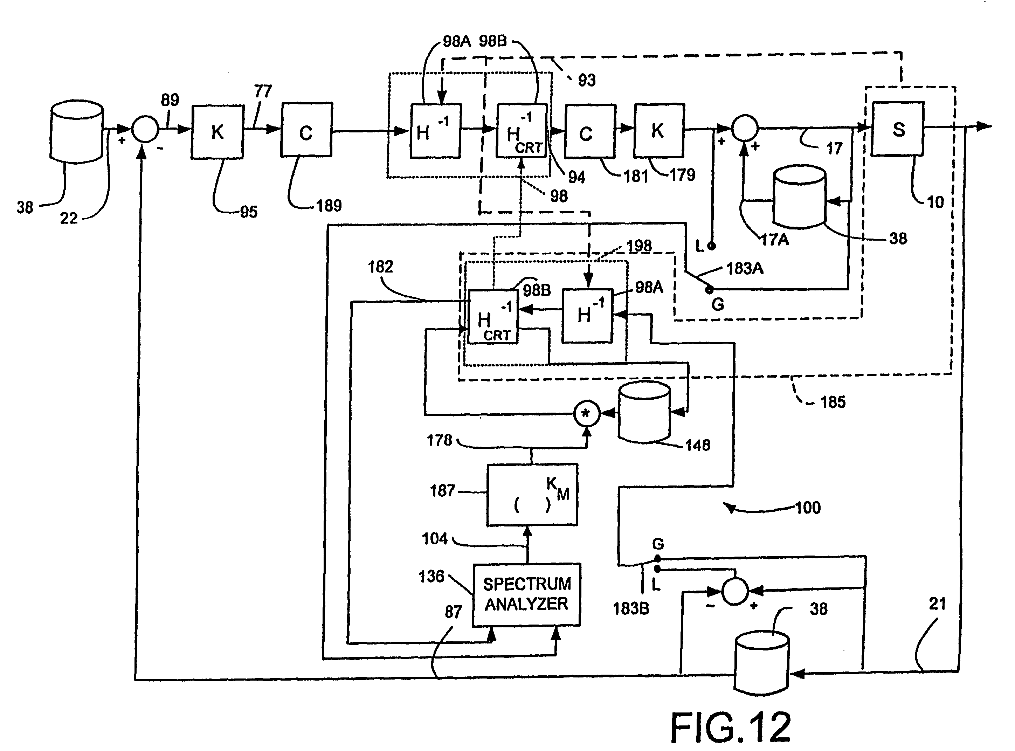

FIG. 12 is an exemplary embodiment for generating drive signals using the virtual identity system modeler 100 described above with respect to FIG. 10, where the same reference numerals have been used to identify identical components of previous embodiments. As in FIG. 10, the virtual identity system 185 is characterized using drive signals. The virtual identity system modeler 100 checks the quality of the identity by comparing drive 17 applied to the physical system 10 with a corresponding modeled drive 182 obtained from an inverse model 198. The inverse model 198 is identical to the inverse model 98 and comprises the static component 98A and the adjustable component 98B. The. embodiment of FIG. 12 operates in a manner similar to the embodiments of FIGS. 6 and 8 wherein the virtual identity system modeler 100 (including the spectrum analyzer 136) adjusts the inverse model 198 by providing update values (herein relaxed correction values 178) to the adjustable component 98B thereof. However, in this embodiment, the adjustable component 98B of the inverse model 98 is also updated in accordance with changes made to the adjustable component 98B of the inverse model 198.

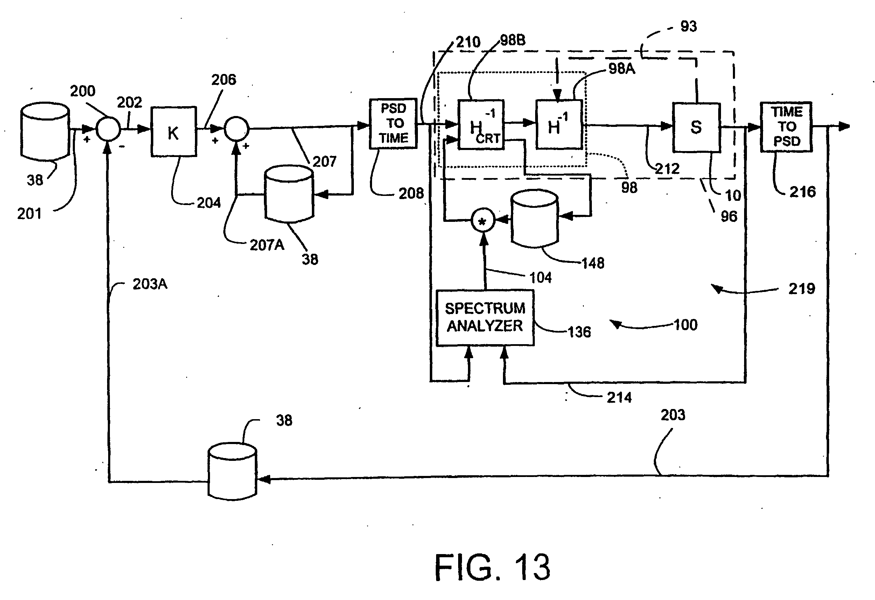

FIG. 13 illustrates use of the virtual identity system modeler 100 in a Spectral Density Control embodiment. Unlike Time History Control that seeks to reproduce the response of the remote transducers 20 with respect to time, Spectral Density Control seeks to reproduce the signal power in the response (including generating the cross-power between channels) as a function of frequency over a selected bandwidth. A power spectral density (PSD) comprises a square matrix with the auto power of each channel on the diagonal and the cross-powers between channels on the respective off-diagonals.

In FIG. 13 the same reference numerals have been used to identify similar components as described with previous embodiments. Generally, a summer 200 calculates a PSD error 202 between a desired PSD response 201 and an actual previous PSD response 203A from the physical system 10. The calculated PSD error 202 is functionally similar to the time history response error 89 calculated in the previous Time History Control embodiments. Commonly, a relaxation gain 204 is applied for substantially the same reasons as the relaxation gain 95 to generate PSD response correction 206. In the embodiment illustrated, the PSD response correction 206 is combined with a previous PSD target response 207A to generate a new PSD target response 207. A PSD-to-time converter 208 converts the PSD target response to the time equivalent target response 210 (similar to target response 79) that is provided to the inverse model 98. The inverse model 98, in turn, is used to generate a drive 212 (similar to drive 17) that is applied to the physical system 10. An actual response 214 (similar to actual response 21) from the physical system 10 is provided to the virtual identity system modeler 100 (herein the spectrum analyzer 136) and to a time-to-PSD converter 216. The virtual identity system modeler 100 checks the quality of identity in a manner similar to the embodiment of FIG. 6 and updates the inverse model 98, and in particular, the adjustable component 98B accordingly. The time-to-PSD converter 216 generates the actual PSD response 203. As appreciated by those skilled in the art, any of the teachings of the previous embodiments of FIGS. 8-12 can be applied by replacing substructure 219 with the corresponding structure of the previous embodiments.

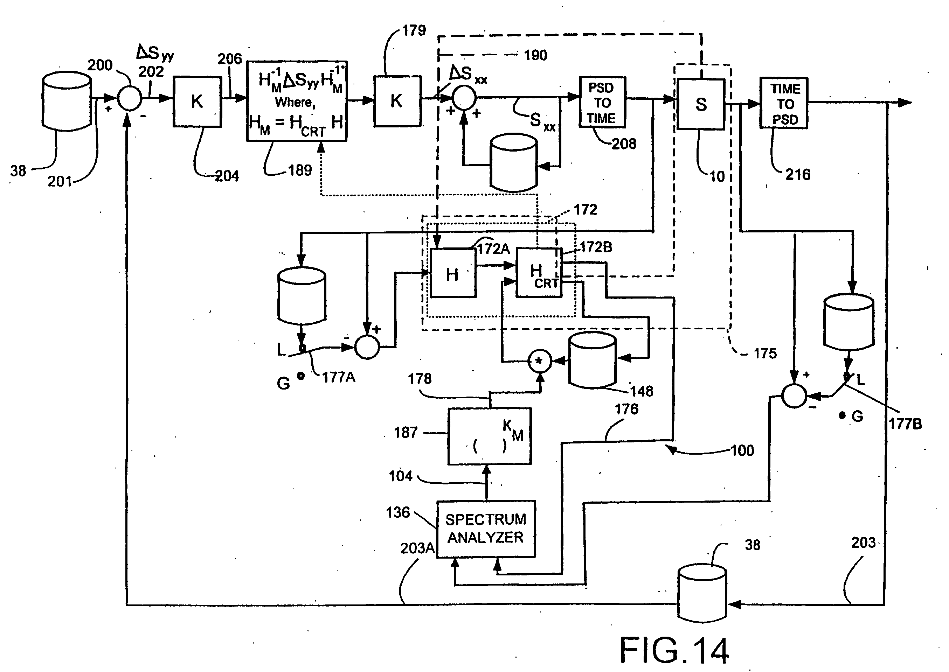

Another embodiment of Spectral Density Control is illustrated in FIG. 14, wherein the drive spectra are calculated directly from the response spectra in the forward loop as shown in block 189 (as familiar to those skilled in the art), where the inverse system model is obtained from 172. The virtual identity system modeling concepts of FIG. 11 are added to the forward spectral density iteration loop to iteratively adapt the system model 172 for the reasons discussed.

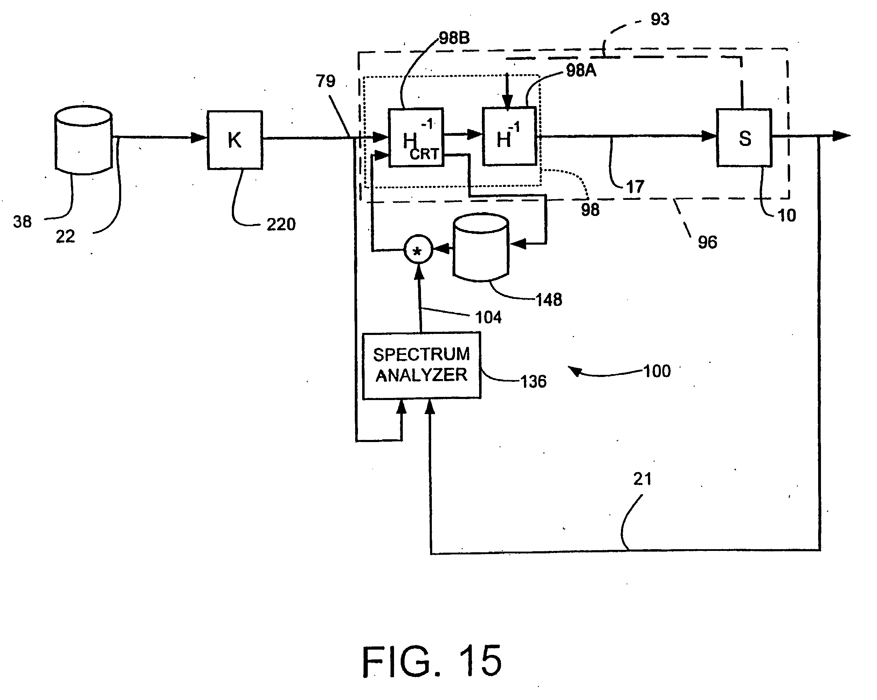

FIG. 15 illustrates use of a Waveform Control embodiment. Like Time History Control, Waveform Control seeks to reproduce the response of the remote transducers 20 with respect to time. Waveform Control does so however without the feedback of the actual response into a summer to provide the response error 89. Rather, each iteration in Waveform Control uses the desired response 22 directly, applied through an attenuation factor 220 to make the target response 79.

Prior art techniques in Waveform Control recalculated the inverse model each iteration by using drive 17 and actual response 21 for that iteration in an effort to reach convergence. However, in this aspect of the present invention, the virtual identity system 96 includes the inverse model 98 (static component 98A and adjustable component 98B) and physical system 10 as illustrated in FIG. 15. The virtual identity system modeler 100 receives the target response 79 and the actual response 21 to measure the quality of identity. As in the previous embodiments, the adjustable component 98B is updated as a function of the quality of identity. Incorporation of the virtual identity system 96 improves single channel system operation and facilitates extension to multi-channel systems not previously feasible.

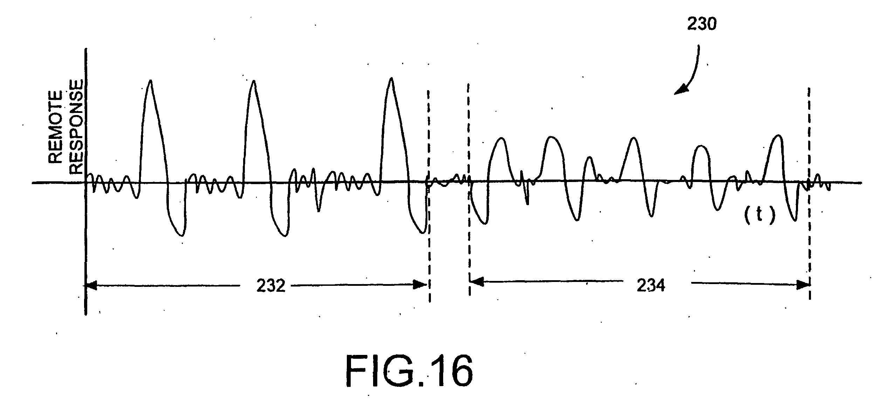

FIG. 16 is a pictorial representation 230 of an example time history record of remote transducer response data from a statistically non-stationary road surface; where a first section 232 is indicative of a sequence of potholes, and where a second section 234 is indicative of cobblestones. Another aspect of the present invention includes constructing a virtual identity system for each section 232 and 234, and obtaining an adjustable component 98B for each of the sections 232 and 234 independently of a common static component 98A. Each adjustable component 98B is applied in combination with the common static component 98A to obtain suitable drives for each of the sections 232 and 234, which are further combined to obtain drive 17 for the entire record 230. Note that virtual identity system modelers are not required to apply to contiguous sections of the record 230.

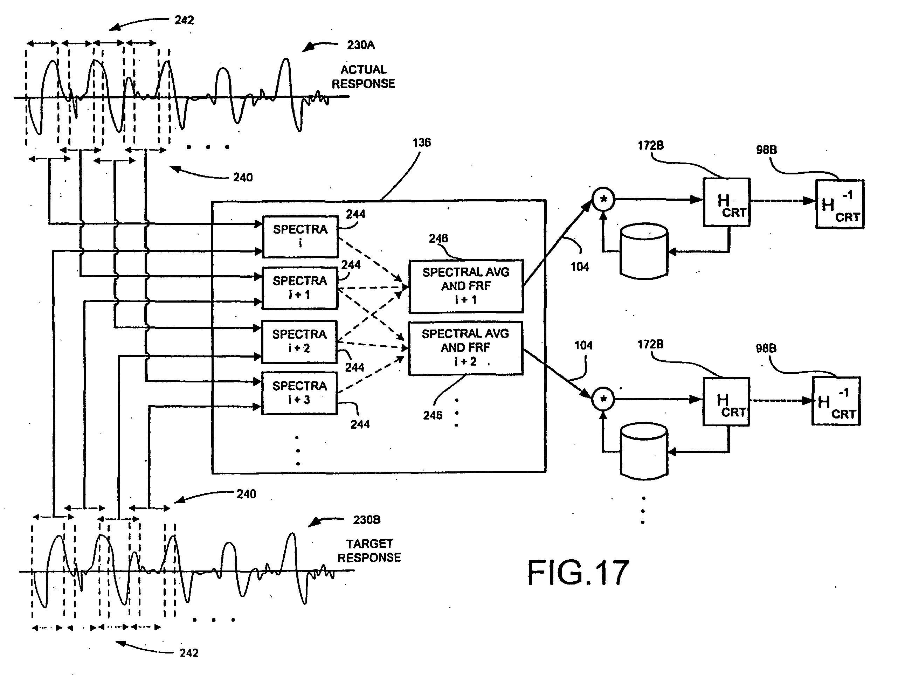

Referring to FIG. 17, another aspect of the present invention includes allowing the model to vary within a section (e.g. section 234) or over the entire record 230, as illustrated below. Using this time varying approach, the spectrum analyzer 136 operates on consecutive and preferably overlapping analysis windows 240 from each of the target and actual responses. Each of the target and actual responses is advanced by a selected time step 242, thereby producing a sequence of spectral values 244 (as opposed to one net spectral average implied in the previous embodiments). In this case, each of the target and actual spectral averages is formed as a two-sided running average of the respective individual spectral values, hence corresponding time varying spectral averages 246 result. The Step 242 is typically between 10-90 percent of the analysis window or frame 240. Preferably, the step is 10-50 percent of the analysis window.

The individual elements of the time varying spectral averages 246 are processed to form a time varying model 104(e.g. FRF) and a time varying model correction component similar to 172B per techniques discussed in the previous embodiments. Each correction component member 172B and corresponding inverse correction component member 98B of the sequence of correction components advances in respect to the time history, whereby processing occurs in time steps equal to time step 242. Generating drive 17 involves applying each correction component 172B and corresponding inverse correction component 98B of the sequence of the correction components to the respective time step 242 of the input record of the target response 230B and combining the results thereof to produce a contiguous drive 17.

Summarizing this embodiment, consecutive and preferably overlapping analysis windows 240 of the record 230 are formed in a stepwise fashion. In the context of the spectral analyzer 136, individual spectral values 244 are obtained for each analysis window 240. Individual spectral values 244 are the combined to form two-sided running spectral averages and corresponding FRFs, which are used in a step-wise manner to generate drive 17 or drive correction 94. Note that other statistical functions can be performed instead of or in addition to averaging.

The spectral running average environment has an inherent stepwise character for processing the model update and applying the model correction. In an alternative embodiment, the correction model can be implemented in parametric form (i.e. not window based) with associated model regression method types such as AIC, ARX, allowing the model to vary from sample point to sample point of the record 230. While the forward static model would be physically realizable, the forward model correction is generally not physically realizable. Furthermore, because the adaptive process is occurring iteratively, at each sample point both past and future data are generally available to optimize the model regression process.

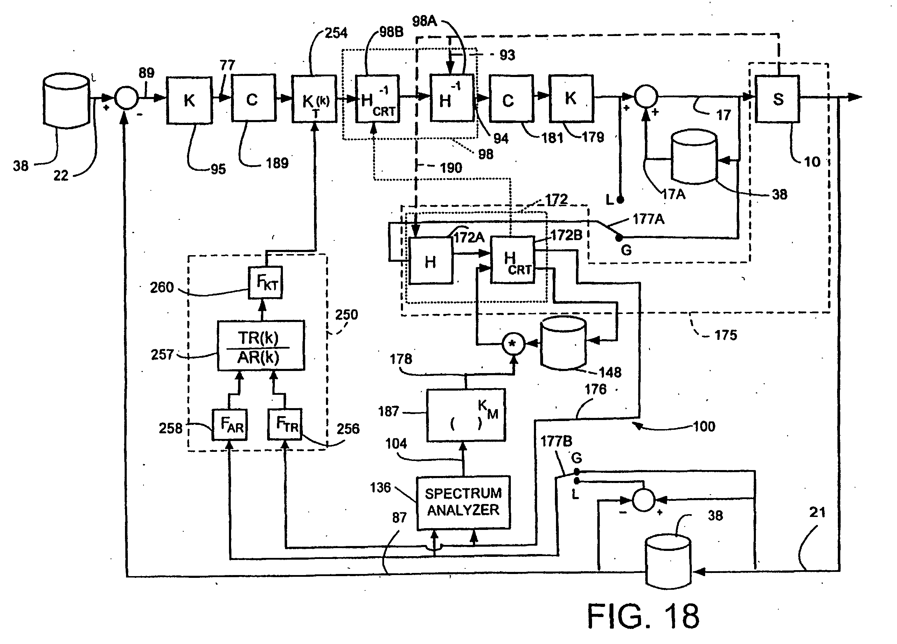

FIG 18 is an embodiment of the present invention that facilitates adjusting the gain on the time history input to the inverse model 98 on a sample point by sample point basis. As illustrated, sample point gain adjusting block 250 receives, as input, the target response 176 and the actual response 177B, or the corrections thereof based on the position of switches 177A and 177B. Note these are the same fundamental inputs received by the virtual identity system modeler 100.

The basic operation of the sample point gain adjusting block 250 is to relate the target response to the actual response (or corrections thereof) at 257 such that a ratio or gain is realized on a sample point by sample point basis, indicated as a (k), thus modeling the correction gain. The output gain per sample point is then applied at 254 to adjust the time history input to the inverse system model 98.

In one embodiment, as indicated in FIG. 18, it may be desirable to apply filtering and threshold operations 256 and 258 to the input signals, which is illustrated as forming part of the sample point gain adjusting block 250. Similarly, it may be desirable to provide a filter 260 to filter the output of the sample point gain adjusting block 250. As appreciated by those skilled in the art, sample point gain adjusting block 250 and block 254 can be incorporated in any of the Time History Control embodiments described above.

Although the present invention has been described with reference to preferred embodiments, workers skilled in the art will recognize that changes may be made in form and detail without departing from the invention. For example, in FIG. 11 (similarly in all embodiments), for certain model types it can be advantageous to directly update (i.e. non-iteratively) the inverse model correction 98B. In this scenario, the virtual identity system modeler 100 would receive as an input model response from static component 172A for all iterations. Further, the relaxed correction values 178 from the virtual identity system modeler 100 are directly applied as the inverse model correction 98B.

## Claims

1. A method of identification of a physical system (10) in which method a drive signal (17, 212) is applied to the physical system (10) which responds with an actual response (21, 214), the method comprising:
defining a virtual identity system (96, 175, 185) comprising at least one of an inverse model (98) of the physical system (10) and a forward model (172) of the physical system (10) in combination with the physical system (10); and
checking a quality of identity of the virtual identity system (96, 175, 185) using at least a function of the actual response (21, 214).

2. The method of claim I wherein said at least one of the inverse model (98) of the physical system (10) and the forward model (172) of the physical system (10) includes an adjustable component (98B, 172B) and a static component (98A, 172A).

3. The method of claim 2 and further comprising:
adjusting the adjustable component (98B, 172B) as a function of the quality of identity.

4. The method of any of the preceding claims wherein checking the quality of identity and generating a drive signal (17, 212) are successively repeated until a desired actual output (21, 214) is obtained, each new drive signal (17, 212) providing a corresponding actual output (21, 214) that is used in a successive iteration of checking the quality of identity.

5. The method of claim 3 wherein checking the quality of identity is successively repeated until a desired actual response power spectral density (203) is obtained after iteration through application of corresponding successive drive signals (212), and wherein each of the actual response signal power spectral density (203) is obtained as a function of a corresponding drive signal (212).

6. The method of claim 1 and further comprising:
adjusting said at least one of the inverse model (98) of the physical system (10) and the forward model (172) of the physical system (10) as a function of the quality of identity.

7. The method of claim 6 wherein the drive signal (17, 212) is generated as a function of the inverse model (98) of the physical system (10).

8. The method of claim 6 wherein said at least one of the inverse model (98) of the physical system (10) and the forward model (172) of the physical system (10) includes an adjustable component (98B, 172B) and a static component (98A, 172A).

9. The method of claim 8 wherein the drive signal (17, 212) is obtained as a function of a plurality of adjustable components (98B, 172B) applied over differing time regions to obtain a desired response.

10. The method of claim 9 wherein the same static component (98A, 172A) is used with each of the plurality of adjustable components (98B, 172B).

11. The method of claim 8 wherein the drive signal (17) is obtained as a function of a sequence of overlapping adjustable components (98B, 172B) applied over sequential, overlapping time regions (240) to obtain a desired response (21, 214).

12. The method of claim 11 wherein the one static component is (98A, 172A) used to generate the drive signal ( 17, 212).

13. The method of claims 8, 9, 10, 11 or 12 wherein checking the quality of identity and generating a drive signal (17, 212) are successively repeated until a desired actual output (21, 214) is obtained, each new drive signal (17, 212) providing a corresponding actual output (21, 214) that is used in a successive iteration of checking the quality of identity.

14. The method of claim 13 wherein the quality of identity is a function of comparing the actual output (21, 214) and a target output (79).

15. The method of claim 13 wherein checking the quality of identity is a function of comparing a difference between successive actual outputs (21,214) with a difference between successive target outputs (77).

16. The method of claim 15 wherein the virtual identity includes the forward model (172) of the physical system (10), and wherein checking the quality of identity includes providing the drive signal (17) to the forward model (172) of the physical system (10) to obtain a modeled output (176) and comparing a first signal being a function of the modeled output (176) with a second signal being a function of the actual output (21), and wherein the method further comprises adjusting the adjustable component (172B) as a function of comparing the first signal and the second signal.

17. The method of claim 16 wherein the first signal comprises a difference between successive modeled outputs (176) and the second signal comprises a difference between successive actual outputs (21).

18. The method of claim 13 wherein the virtual identity includes the inverse model (98) of the physical system (10), and wherein checking the quality of identity includes providing the actual output (21) to the inverse model (98) of the physical system (10) to obtain a modeled drive signal (182) and comparing a first signal being a function of the modeled drive signal (182) with a second signal being a function of the drive signal (17) corresponding to the actual output (21), and wherein the method further comprises adjusting the adjustable component (98B) as a function of comparing the first signal and the second signal.

19. The method of claim 18 wherein the first signal comprises a difference between successive modeled drive signals (182) and the second signal comprises a difference between successive drive signals (17) of corresponding successive actual outputs (21).

20. The method of any of the claims 1-3 wherein checking the quality of identity is performed on a sample point by sample point basis and adjusting the gain on the time history input to the inverse model (98) on a sample point by sample point basis.

21. A computer implemented method according to any one of the preceding claims.

22. A computer readable medium including instructions readable by a computer, which when implemented, causes the computer to identify a physical system (10) according to the method of any one of the preceding method claims.

23. A system adapted to perform any one of the methods of the preceding method claims.

## Patentansprüche

1. Verfahren zum Identifizieren eines physikalischen Systems (10), wobei dem physikalischen System (10) ein Ansteuerungssignal (17, 212) zugeführt wird und das physikalische System mit einem Ist-Antwortsignal (21, 214) antwortet, wobei das Verfahren die Schritte aufweist:
Definieren eines Virtual-Identity-Systems (96, 175, 185), das ein inverses Modell (98) des physikalischen Systems (10) und/oder ein Vorwärtsmodell (172) des physikalischen Systems (10) in Kombination mit dem physikalischen System (10) aufweist; und
Prüfen einer Identity-Qualität des Virtual-Identity-Systems (96, 175, 185) unter Verwendung mindestens einer Funktion des Ist-Antwortsignals (21, 214).

2. Verfahren nach Anspruch 1, wobei das inverse Modell (98) des physikalischen Systems (10) und/oder das Vorwärtsmodell (172) des physikalischen Systems (10) eine einstellbare Komponente (98B, 172B) und eine statische Komponente (98A, 172A) aufweist.

3. Verfahren nach Anspruch 2, ferner mit dem Schritt: Einstellen der einstellbaren Komponente (98B, 172B) als Funktion der Identity-Qualität.

4. Verfahren nach einem der vorangehenden Ansprüche, wobei das Prüfen der Identity-Qualität und das Erzeugen eines Ansteuerungssignals (17, 212) aufeinanderfolgend wiederholt wird, bis ein gewünschtes Ist-Ausgangssignal (21, 214) erhalten wird, wobei durch jedes neue Ansteuerungssignal (17, 212) ein entsprechendes Ist-Ausgangssignal (21, 214) bereitgestellt wird, das in einer nachfolgenden Iteration zum Prüfen der Identity-Qualität verwendet wird.

5. Verfahren nach Anspruch 3, wobei das Prüfen der Identity-Qualität aufeinanderfolgend wiederholt wird, bis nach einer Iteration durch Anwenden entsprechender aufeinanderfolgender Ansteuerungssignale (212) eine gewünschte spektrale Leistungsdichte (203) des Ist-Antwortsignals erhalten wird, und wobei jede spektrale Leistungsdichte (203) des Ist-Antwortsignals als Funktion eines entsprechenden Ansteuerungssignals (212) erhalten wird.

6. Verfahren nach Anspruch 1, ferner mit dem Schritt: Einstellen des inversen Modells (98) des physikalischen systems (10) und/oder des Vorwärtsmodells (172) des physikalischen Systems (10) als Funktion der Identity-Qualität.

7. Verfahren nach Anspruch 6, wobei das Ansteuerungssignal (17, 212) als Funktion des inversen Modells (98) des physikalischen Systems (10) erzeugt wird.

8. Verfahren nach Anspruch 6, wobei das inverse Modell (98) des physikalischen Systems (10) und/oder das Vorwärtsmodell (172) des physikalischen Systems (10) eine einstellbare Komponente (98B, 172B) und eine statische Komponente (98A, 172A) aufweist.

9. Verfahren nach Anspruch 8, wobei das Ansteuerungssignal (17, 212) als Funktion mehrerer einstellbarer Komponenten (98B, 172B) erhalten wird, die über verschiedene Zeitbereiche zugeführt werden, um ein gewünschtes Antwortsignal zu erhalten.

10. Verfahren nach Anspruch 9, wobei die gleiche statische Komponente (98A, 172A) mit jeder der mehreren einstellbaren Komponenten (98B, 172B) verwendet wird.

11. Verfahren nach Anspruch 8, wobei das Ansteuerungssignal (17) als Funktion einer Folge überlappender einstellbarer Komponenten (98B, 172B) erhalten wird, die über aufeinanderfolgende, überlappende Zeitbereiche (240) zugeführt werden, um ein gewünschtes Antwortsignal (21, 214) zu erhalten.

12. Verfahren nach Anspruch 11, wobei die eine statische Komponente (98A, 172A) verwendet wird, um das Ansteuerungssignal (17, 212) zu erzeugen.

13. Verfahren nach Anspruch 8, 9, 10, 11 oder 12, wobei das Prüfen der Identity-Qualität und das Erzeugen eines Ansteuerungssignals (17, 212) aufeinanderfolgend wiederholt werden, bis ein gewünschtes Ist-Ausgangssignal (21, 214) erhalten wird, wobei durch jedes neue Ansteuerungssignal (17, 212) ein entsprechendes Ist-Ausgangssignal (21, 214) bereitgestellt wird, das in einer nachfolgenden Iteration zum Prüfen der Identity-Qualität verwendet wird.

14. Verfahren nach Anspruch 13, wobei die Identity-Qualität eine Funktion eines Vergleichs des Ist-Ausgangssignals (21, 214) mit einem Soll-Ausgangssignal (79) ist.

15. Verfahren nach Anspruch 13, wobei das Prüfen der Identity-Qualität eine Funktion eines Vergleichs einer Differenz zwischen aufeinanderfolgenden Ist-Ausgangssignalen (21, 214) mit einer Differenz zwischen aufeinanderfolgenden Soll-Ausgangssignalen (77) ist.

16. Verfahren nach Anspruch 15, wobei die Virtual Identity das Vorwärtsmodell (172) des physikalischen Systems (10) aufweist, und wobei das Prüfen der Identity-Qualität das Zuführen des Ansteuerungssignals (17) zum Vorwärtsmodell (172) des physikalischen Systems (10), um ein modelliertes Ausgangssignal (176) zu erhalten, und das Vergleichen eines ersten Signals, das eine Funktion des modellierten Ausgangssignals (176) ist, mit einem zweiten Signal, das eine Funktion des Ist-Ausgangssignals (21) ist, aufweist, und wobei das Verfahren ferner das Einstellen der einstellbaren Komponente (172B) als Funktion eines Vergleichs des ersten mit dem zweiten Signal aufweist.

17. Verfahren nach Anspruch 16, wobei das erste Signal eine Differenz zwischen aufeinanderfolgenden modellierten Ausgangssignalen (176) und das zweite Signal eine Differenz zwischen aufeinanderfolgenden Ist-Ausgangssignalen (21) aufweist.

18. Verfahren nach Anspruch 13, wobei die Virtual Identity das inverse Modell (98) des physikalischen Systems (10) aufweist, und wobei das Prüfen der Identity-Qualität das Zuführen des Ist-Ausgangssignals (21) zum inversen Modell (98) des physikalischen Systems (10), um ein modelliertes Ansteuerungssignal (182) zu erhalten, und das Vergleichen eines ersten Signals, das eine Funktion des modellierten Ansteuerungssignals (182) ist, mit einem zweiten Signal, das eine Funktion des dem Ist-Ausgangssignal (21) entsprechenden Ansteuerungssignals (17) ist, aufweist, und wobei das Verfahren ferner das Einstellen der einstellbaren Komponente (98B) als Funktion eines Vergleichs des ersten mit dem zweiten Signal aufweist.

19. Verfahren nach Anspruch 18, wobei das erste Signal eine Differenz zwischen aufeinanderfolgenden modellierten Ansteuerungssignalen (182) und das zweite Signal eine Differenz zwischen aufeinanderfolgenden Ansteuerungssignalen (17) entsprechender aufeinanderfolgender Ist-Ausgangssignale (21) aufweist.

20. Verfahren nach einem der Ansprüche 1 bis 3, wobei das Prüfen der Identity-Qualität abtastpunktweise ausgeführt wird und das Einstellen des Multiplikationsfaktors des dem inversen Modell (98) zugeführten Time-History-Eingangssignals abtastpunktweise ausgeführt wird.

21. Computerimplementierbares Verfahren nach einem der vorangehenden Ansprüche.

22. Computerlesbares Medium mit durch einen Computer lesbaren Befehlen, die, wenn sie ausgeführt werden, den Computer veranlassen, ein physikalisches System (10) gemäß einem Verfahren nach einem der vorangehenden Verfahrensansprüche zu identifizieren.

23. System, das dazu geeignet ist, eines der Verfahren der vorangehenden Verfahrensansprüche auszuführen.

## Revendications

1. Procédé d'identification d'un système physique (10) dans lequel un signal d'attaque (17, 212) est appliqué au système physique (10) qui y répond par une réponse effective (21, 214), le procédé comprenant les étapes qui consistent à :
- définir un système virtuel identique (96, 175, 185) qui comprend un modèle inverse (98) du système physique (10) et/ou un modèle direct (172) du système physique (10) en combinaison avec le modèle physique (10) et
- vérifier la qualité de l'identité du système virtuel identique (96, 175, 185) en utilisant au moins une fonction de la réponse effective (21, 214).

2. Procédé selon la revendication 1, dans lequel au moins ledit modèle inverse (98) du système physique (10) et/ou ledit modèle direct (172) du système physique (10) comprennent une composante ajustable (98B, 172B) et une composante statique (98A, 172A).

3. Procédé selon la revendication 2, qui comprend en outre l'étape qui consiste à ajuster la composante ajustable (98B, 172B) en fonction de la qualité de l'identité.

4. Procédé selon l'une quelconque des revendications précédentes, dans lequel la vérification de la qualité de l'identité et la création d'un signal d'attaque (17, 212) sont répétées successivement jusqu'à ce que l'on obtienne une sortie effective (21, 214) souhaitée, chaque nouveau signal d'attaque (17, 212) donnant une sortie effective (21, 214) correspondante qui est utilisée dans une itération suivante de vérification de la qualité de l'identité.

5. Procédé selon la revendication 3, dans lequel la vérification de la qualité de l'identité est répétée successivement jusqu'à ce que l'on obtienne une réponse effective souhaitée en termes de densité spectrale de puissance (203) après itération par application de signaux d'attaque (212) successifs correspondants et dans lequel chacun des signaux de réponse effective souhaitée en termes de densité spectrale de puissance (203) est obtenu comme fonction d'un signal d'attaque (212) correspondant.

6. Procédé selon la revendication 1, qui comprend en outre l'étape qui consiste à ajuster au moins ledit modèle inverse (98) du système physique (10) et/ou ledit modèle direct (172) du système physique (10) en fonction de la qualité de l'identité.

7. Procédé selon la revendication 6, dans lequel le signal d'attaque (17, 212) est créé comme fonction du modèle inverse (98) du système physique (10).

8. Procédé selon la revendication 6, dans lequel au moins ledit modèle inverse (98) du système physique (10) et/ou ledit modèle direct (172) du système physique (10) comprennent une composante ajustable (98B, 172B) et une composante statique (98A, 172A).

9. Procédé selon la revendication 8, dans lequel le signal d'attaque (17, 212) est obtenu comme fonction de plusieurs composantes ajustables (98B, 172B) qui sont appliquées dans différentes plages de temps pour obtenir une réponse souhaitée.

10. Procédé selon la revendication 9, dans lequel la même composante statique (98A, 172A) est utilisée pour chacune des différentes composantes ajustables (98B, 172B).

11. Procédé selon la revendication 8, dans lequel le signal d'attaque (17) est obtenu comme fonction d'une séquence de composantes ajustables (98B, 172B) superposées qui sont appliquées dans des plages de temps (240) successives qui se superposent pour obtenir une réponse souhaitée (21, 214).

12. Procédé selon la revendication 11, dans lequel la composante statique (98A, 172A) est utilisée pour créer le signal d'attaque (17, 212).

13. Procédé selon les revendications 8, 9, 10, 11 ou 12, dans lequel la vérification de la qualité de l'identité et la création d'un signal d'attaque (17, 212) sont répétées successivement jusqu'à ce que l'on obtienne une sortie effective souhaitée (21, 214), chaque nouveau signal d'attaque (17, 212) donnant une sortie effective (21, 214) correspondante qui est utilisée dans une itération suivante pour vérifier la qualité de l'identité.

14. Procédé selon la revendication 13, dans lequel la qualité de l'identité est une fonction de la comparaison entre la sortie effective (21, 214) et une sortie-cible (79).

15. Procédé selon la revendication 13, dans lequel la vérification de la qualité de l'identité est une fonction de la comparaison entre la différence entre des sorties effectives (21,214) successives et la différence entre des sorties-cibles (77) successives.

16. Procédé selon la revendication 15, dans lequel l'identité virtuelle comprend le modèle direct (172) du système physique (10) et dans lequel la vérification de la qualité de l'identité comprend la fourniture du signal d'attaque (17) au modèle direct (172) du système physique (10) pour obtenir une sortie modélisée (176) et la comparaison entre un premier signal qui est fonction de la sortie modélisée (176) et un deuxième signal qui est fonction de la sortie effective (21), le procédé comprenant en outre l'ajustement de la composante ajustable (172B) en fonction de la comparaison entre le premier signal et le deuxième signal.

17. Procédé selon la revendication 16, dans lequel le premier signal comprend la différence entre des sorties modélisées (176) successives et le deuxième signal comprend la différence entre des sorties effectives (21) successives.

18. Procédé selon la revendication 13, dans lequel l'identité virtuelle comprend le modèle inverse (98) du système physique (10) et dans lequel la vérification de la qualité de l'identité comprend la fourniture de la sortie effective (21) au modèle inverse (98) du système physique (10) pour obtenir un signal d'attaque modélisé (182) et la comparaison entre un premier signal qui est fonction de la sortie modélisée (182) et un deuxième signal qui est fonction du signal d'attaque (17) qui correspond à la sortie effective (21), le procédé comprenant en outre l'ajustement de la composante ajustable (98B) en fonction de la comparaison entre le premier signal et le deuxième signal.

19. Procédé selon la revendication 18, dans lequel le premier signal comprend la différence entre des signaux d'attaque modélisés (182) successifs et le deuxième signal comprend la différence entre des signaux d'attaque (17) successifs qui correspondent aux sorties effectives (21) successives.

20. Procédé selon l'une quelconque des revendications 1 à 3, dans lequel la vérification de la qualité de l'identité est exécutée sur base de points d'échantillonnage discrets et l'ajustement du gain sur l'historique temporel injecté dans le modèle inverse (98) est exécuté sur base de points d'échantillonnage discrets.

21. Procédé selon l'une quelconque des revendications précédentes, mis en oeuvre sur ordinateur.

22. Support lisible par ordinateur, qui contient des instructions lisibles par l'ordinateur et qui, lorsqu'elles sont mises en oeuvre, amènent l'ordinateur à identifier un système physique (10) selon le procédé de l'une quelconque des revendications de procédé qui précèdent.

23. Système adapté pour exécuter l'un quelconque des procédés selon les revendications de procédé qui précèdent.
